# EUROPEAN PATENT APPLICATION

(11) **EP 2 807 968 A1**
(43) Date of publication of application: **03.12.2014**
(21) Application number: 13002830.1
(22) Date of filing: 31.05.2013
(51) Int. Cl.: A47J 43/046

(54) **Food processor with safety and position detection**

(71) Applicant: Ya Horng Electronic Co., Ltd., Tainan City 74555 (TW)
(72) Inventor: Huang, Jin-Yi, 74555 Tainan City (TW)
(74) Representative: Zeitler - Volpert - Kandlbinder

(57) **Abstract**

A food processor (100) includes: a motor base (3) having a housing (30) for housing a motor unit (1) ; a container (2) having a container bottom (20); and a switch unit (6) provided on the housing (30) and the container bottom (20), and coupled to a detecting unit (42) and a control unit (5) in the housing (30) and to an NTC thermal resistor (41) and a heating unit (7) in the container bottom (20). When the container bottom (20) is securely and correctly mounted to the housing (30), the switch unit (6) is actuated such that the control unit (5) supplies a supply voltage (V0) to the NTC thermal resistor (41) and such that the control unit (5) is operable to control the heating unit (7) and the motor unit (1) based on a detecting signal (V1) from the detecting unit (4).

## Description

The invention relates to a food processor, more particularly to a food processor capable of heating food items contained therein.

A conventional food processor generally includes: a motor base including a motor unit; and a food container mounted removably to the motor base and provided with a cutting blade unit that is driven by the motor unit to rotate so as to cut and blend food items contained in the food container. Generally, a positioning mechanism, which includes, for example, complementary engaging grooves and protrusions, is provided on the motor base and the food container. For safety purposes, the motor unit is only able to be activated after each engaging groove exactly engages a respective protrusion by manual operation of the food container.

It is desirable to automatically detect positioning of the food container on the motor base so as to ensure safety during use.

The object of the present invention is to provide a food processor that can easily judge whether a container is correctly mounted to a motor base and that can ensure safety during use.

According to the present invention, a food processor comprises a motor base, a container, a heating unit, a negative temperature coefficient (NTC) thermal resistor, a detecting unit, a control unit, and a switch unit. The motor base includes a housing, and a motor unit mounted in the housing. The motor unit has an exposed blade driving section. The container is used to contain food items, and has a container bottom mounted removably to the housing. The heating unit is mounted in the container bottom for heating the food items contained in the container. The NTC thermal resistor is mounted in the container bottom, and has first and second ends. The detecting unit is disposed in the housing for outputting a detecting signal. The control unit is coupled to the motor unit and the detecting unit, and receives the detecting signal from the detecting unit. The switch unit is provided on the container bottom of the container and the housing, and is coupled to the NTC thermal resistor, the heating unit, the detecting unit and the control unit.

When the container bottom is securely and correctly mounted to the housing, the switch unit is actuated to establish an electrical connection between the second end of the NTC thermal resistor and the detecting unit, an electrical connection between the control unit and the first end of the NTC thermal resistor, and an electrical connection between the control unit and the heating unit, such that the control unit supplies the supply voltage to the first end of the NTC thermal resistor through the switch unit and such that the control unit is operable to control the heating unit and the motor unit based on the detecting signal.

Other features and advantages of the present invention will become apparent in the following detailed description of the preferred embodiment with reference to the accompanying drawings, of which:
Figure 1 is a perspective view showing the preferred embodiment of a food processor according to this invention;
Figure 2 is an exploded fragmentary perspective view of the preferred embodiment;
Figure 3 is a schematic circuit block diagram of the preferred embodiment; and
Figure 4 is a schematic equivalent circuit block diagram of the preferred embodiment when a switch unit is actuated.

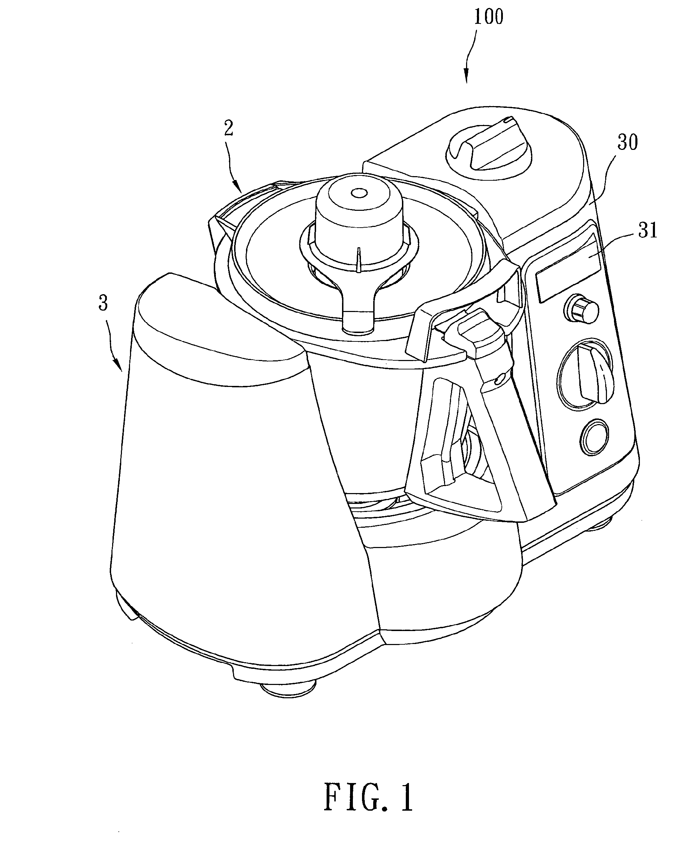

Referring to Figures 1 to 3, the preferred embodiment of a food processor 100 according to the present invention is shown to include a motor base 3, a container 2, a heating unit 7, a negative temperature coefficient (NTC) thermal resistor 41, a detecting unit 4, a control unit 5, a switch unit 6, and a display screen 31.

The motor base 3 includes a housing 30, and a motor unit 1 mounted in the housing 30. The motor unit 1 has an exposed blade driving section 11.

The container 2 is adapted for containing food items (not shown), and has a container bottom 20 mounted removably on the housing 30 of the motor base 3. The container bottom 20 is provided with a cutting blade unit 22 that protrudes outward from the container bottom 20, that is coupled to the blade driving section 11 of the motor unit 1 when the container bottom 20 is mounted to the housing 30 of the motor base 3 and that is to be driven rotatably by the motor unit 1.

The heating unit 7 includes a heating element (not shown), and is mounted in the container bottom 20 for heating the food items contained in the container 2.

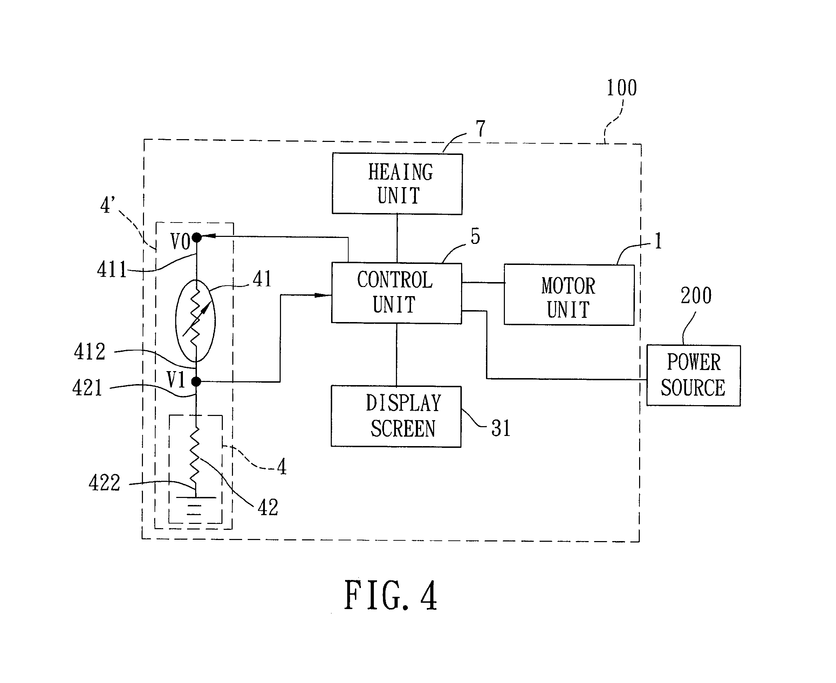

The NTC thermal resistor 41 is mounted in the container bottom 20 of the container 2, and has first and second ends 411, 412 (see Figure 4) . The NTC thermal resistor 41 has a resistance (R1) that is inversely proportional to a temperature sensed thereby.

The detecting unit 4 is disposed in the housing 30 for outputting a detecting signal (V1). In this embodiment, referring to Figure 4, the detecting unit 4 includes a detecting resistor 42 that has a first end 421 and a grounded second end 422. A voltage across the detecting resistor 42 serves as the detecting signal (V1). The detecting resistor 42 has a resistance (R2).

The control unit 5 is adapted to be coupled to a power source 200 for receiving electrical power therefrom. The control unit 5 is further coupled to the motor unit 1 and the first end 421 of the detecting resistor 42, and receives the detecting signal (V1) from the detecting unit 4. The control unit 5 is operable to output a supply voltage (V0) based on the electrical power.

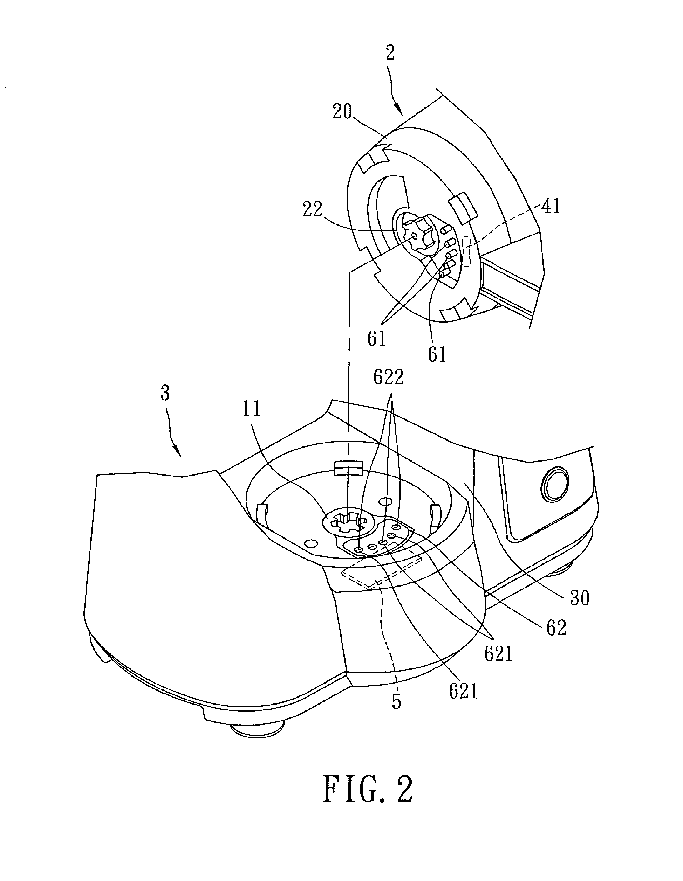

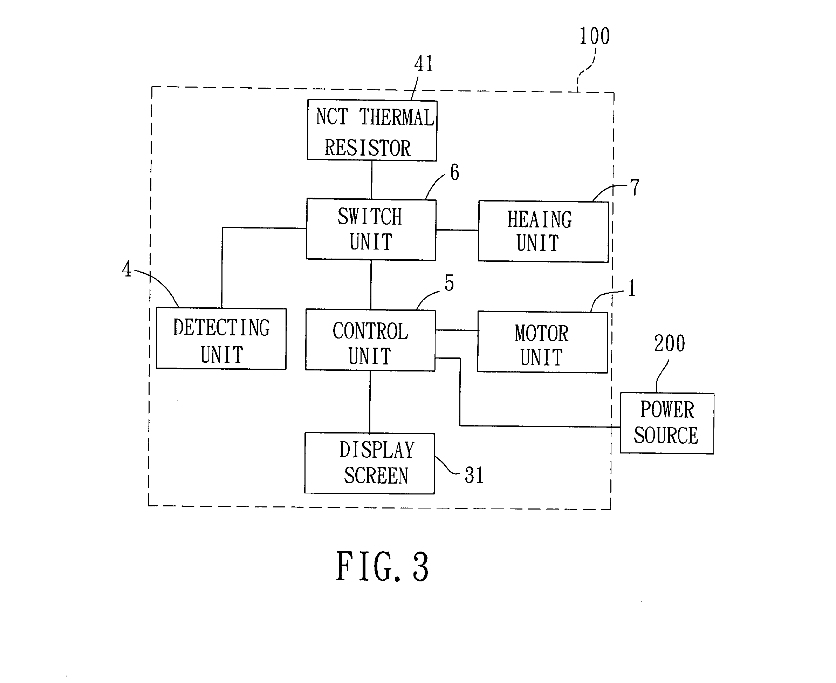

Referring back to Figures 2 and 3, the switch unit 6 is provided on the container bottom 20 of the container 2 and the housing 30 of the motor base 3, and is coupled to the NTC terminal resistor 41, the heating unit 7, the detecting unit 4 and the control unit 5. In this embodiment, the switch unit 6 includes a plurality of pin terminals 61 provided on the container bottom 20, and a socket 62 provided on the housing 30. The pin terminals 61 protrude outwardly from the container bottom 20, and are each coupled to a corresponding one of the first and second ends 411, 412 of the NTC thermal resistor 41 and the heating unit 7. The socket 62 includes a plurality of pin receptacles 621 that are formed in the housing 30 and that permit insertion of the pin terminals 61 thereinto when the container bottom 20 is placed on the housing 30, and a plurality of conductive socket contacts 622 that are respectively disposed in the pin receptacles 622. One conductive socket contact 622 is coupled to the first end 421 of the detecting resistor 42, and the other conductive socket contacts 622 are coupled to the control unit 5.

When the container bottom 20 is securely and correctly mounted to the housing 30, the pin terminals 61 are inserted into the pin receptacles 621 and electrically contact the conductive socket contacts 622, respectively. In this case, the switch unit 6 is actuated to establish an electrical connection between the second end 412 of the NTC thermal resistor 41 and the first end 421 of the detecting resistor 42 of the detecting unit 4, an electrical connection between the control unit 5 and the first end 411 of the NTC thermal resistor 41, and an electrical connection between the control unit 5 and the heating unit 7. Thus, the control unit 5 supplies the supply voltage (V0) to the first end 411 of the NTC thermal resistor 41 through a common node of a respective connected pair of the conductive socket contact 622 and the pin terminal 621. The NTC thermal resistor 41 and the detecting resistor 42 are coupled in series between the common node and ground. The control unit 5 is operable to control the heating unit 7 and the motor unit 1 based on the detecting signal (V1).

It is noted that, when the switch unit 6 is actuated, the detecting resistor 42 and the NTC thermal resistor 41 cooperatively constitute a temperature sensor 4' for sensing a temperature of the food items contained in the container 2, as shown in Figure 4. The detecting signal (V1) from the detecting unit 4 indicates the temperature of the food items contained in the container 2.

The display screen 31 is provided on the housing 30, and is coupled to the control unit 5 for displaying the temperature of the food items contained in the container 2.

When the control unit 5 determines that the detecting signal (V1) is zero (i.e., V1=0), the food processor 100 is in an open-circuit state, where the switch unit 6 is not actuated, due to incorrect mounting of the container bottom 20 to the housing 30. In this case, the control unit 5 is disconnected from the heating unit 7, and ceases operation of the motor unit 1.

After the switch unit 6 is actuated, when the control unit 5 determines that the detecting signal (V1) is within a voltage range from a first threshold voltage, which corresponds to a first temperature sensed by the NTC thermal resistor 41, to a second threshold voltage, which is greater than the first threshold voltage and corresponds to a second temperature sensed by the NTC thermal resistor 41 and higher than the first temperature, the food processor 100 operates in a normal state, where the control unit 5 is capable of activating the heating unit 7 to heat the food items contained in the container 2 and of controlling operation of the motor unit 1. The first and second threshold voltages are smaller than the supply voltage (V0). In addition, when the control unit 5 determines that the detecting signal (V1) is equal to the supply voltage (V0), the food processor 100 is in a short-circuit state, where a short circuit occurs in the NTC thermal resistor 41 and where the control unit 5 deactivates the heating unit 7 and the motor unit 1. Further, when the control unit 5 determines that the detecting signal (V1) is greater than zero and smaller than the first threshold voltage or that the detecting signal (V1) is greater than the second threshold voltage and smaller than the supply voltage (V0), the food processor 100 is in an abnormal state, where the control unit 5 deactivates the heating unit 7 and the motor unit 1.

For example, if V0=5V and R2=100kΩ, Table 1 illustrates the relationships among the detecting signal (V1), the resistance (R1) of the NTC thermal resistor 41, and the temperature sensed by the NTC thermal resistor 41.

**Table 1**

| V1 (V) | Resistance R1(kΩ) | Temperature (°C) |
|---|---|---|
| 0.33 | 1415.15 | -10 |
| 1.51 | 231.13 | 25 |
| 2.28 | 119.30 | 40 |
| 3.27 | 52.91 | 60 |
| 3.98 | 25.63 | 80 |
| 4.42 | 13.12 | 100 |
| 4.90 | 2.04 | 170 |
| 4.93 | 1.24 | 190 |

In this example, the first and second threshold voltages can be, but not limited to, 0.33V and 4. 93V, respectively. Thus, the first and second temperatures are respectively -10°C and 190°C. As a result, when 0V<V1<0.33V, the food processor 100 is in the abnormal state. When 0.33V≦ V1 ≦ 0.93V, the food processor 100 is in the normal state. When 0.93<V1<5V, the food processor 100 is in the abnormal state. When V1=5V, the food processor 100 is in the short-circuit state.

To sum up, the control unit 5 can easily judge, based on the detecting signal (V1) from the detecting unit 4, whether the switch unit 6 is actuated, i.e., the container bottom 20 is securely and correctly mounted to the housing 30. Therefore, the food processor 100 of this invention can automatically detect correct mounting of the container 2 to the housing 30. On the other hand, after the switch unit 6 is actuated, the control unit 5 can easily judge, based on the detecting signal (V1), a current one of the normal, abnormal and short-circuit states in which the food processor 100 is operated. In this case, the heating unit 7 and the motor unit 1 can be appropriately controlled by the control unit 5, thereby ensuring safety during use.

## Claims

1. A food processor (100) comprising:
a motor base (3) including a housing (30) and a motor unit (1) mounted in said housing (30), said motor unit (1) having an exposed blade driving section (11);
a container (2) used to contain food items and having a container bottom (20) that is mounted removably to said housing (30);
a heating unit (7) mounted in said container bottom (20) for heating the food items contained in said container (2);
a negative temperature coefficient (NTC) thermal resistor (41) mounted in said container bottom (20) and having first and second ends (411, 412);
a detecting unit (4) disposed in said housing (30) for outputting a detecting signal (V1);
a control unit (5) coupled to said motor unit (1) and said detecting unit (4), and receiving the detecting signal (V1) from said detecting unit (4); and
a switch unit (6) provided on said container bottom (20) of said container (2) and said housing (30), and coupled to said NTC thermal resistor (41), said heating unit (7), said detecting unit (4) and said control unit (5);
wherein, when said container bottom (20) is securely and correctly mounted to said housing (30), said switch unit (6) is actuated to establish an electrical connection between said second end (412) of NTC thermal resistor (41) and said detecting unit (4), an electrical connection between said control unit (5) and said first end (411) of said NTC thermal resistor (41), and an electrical connection between said control unit (5) and said heating unit (7), such that said control unit (5) supplies a supply voltage (V0) to said first end (411) of said NTC thermal resistor (41) through said switch unit (6) and such that said control unit (5) is operable to control said heating unit (7) and said motor unit (1) based on the detecting signal (V1).

2. The food processor (100) as claimed in Claim 1, wherein:
said detecting unit (4) includes a detecting resistor (42) that has a first end (421) coupled to said control unit (5) and coupled to said switch unit (6), and a grounded second end (422), a voltage across said detecting resistor (42) serving as the detecting signal (V1); and
when said control unit (5) determines that the detecting signal (V1) is zero, said foodprocessor (100) is in an open-circuit state, where said switch unit (6) is not actuated, due to incorrect mounting of said container bottom (20) to said housing (30).

3. The foodprocessor (100) as claimed in Claim 2, wherein, when said switch unit (6) is actuated:
said detecting resistor (42) and said NTC thermal resistor (41) are coupled in series between ground and a common node between said control unit (5) and said first end (411) of said NTC thermal resistor (41), and cooperatively constitute a temperature sensor (4') for sensing a temperature of the food items contained in said container (2); and
the detecting signal (V1) from said detecting unit (4) indicates the temperature of the food items contained in said container (2).

4. The food processor (100) as claimed in Claim 3, further comprising a display screen (31) provided on said housing (30) and coupled to said control unit (5) for displaying the temperature of the food items contained in said container (2).

5. The food processor (100) as claimed in Claim 3, wherein:
when said control unit (5) determines that the detecting signal (V1) is within a voltage range from a first threshold voltage, which corresponds to a first temperature sensed by said NTC thermal resistor (41), to a second threshold voltage, which is greater than the first threshold voltage and corresponds to a second temperature sensed by said NTC thermal resistor (41) and higher than the first temperature, said food processor (100) operates in a normal state, where said control unit (5) is capable of activating said heating unit (7) to heat the food items contained in said container (2); and
the first and second threshold voltages are smaller than the supply voltage (V0).

6. The food processor (100) as claimed in Claim 5, wherein, when said control unit (5) determines that the detecting signal (V1) is equal to the supply voltage (V0), said food processor (100) is in a short-circuit state, where a short circuit occurs in said NTC thermal resistor (41) and where said control unit (5) deactivates said heating unit (7) and said motor unit (1).

7. The food processor (100) as claimed in Claim 5, wherein, when said control unit (5) determines that the detecting signal (V1) is greater than zero and smaller than the first threshold voltage or that the detecting signal (V1) is greater than the second threshold voltage and smaller than the supply voltage (V0), said food processor (100) is in an abnormal state, where said control unit (5) deactivates said heating unit (7) and said motor unit (1).

8. The food processor (100) as claimed in Claim 5, wherein the supply voltage (V0) is 5V, the first threshold voltage is 0.33V, and the second threshold voltage is 4.93V.

9. The food processor (100) as claimed in Claim 2, wherein said switch unit (6) includes
a plurality of pin terminals (61) protruding outwardly from said container bottom (20) of said container (2) and coupled correspondingly to said first and second ends (411, 412) of said NTC thermal resistor (41) and said heating unit (7), and
a socket (62) provided on said housing (30) and including
a plurality of pin receptacles (621) that are formed in said housing (30), and that permit respective insertion of said pin terminals (61) thereinto when said container bottom (20) is placed on said housing (30), and
a plurality of conductive socket contacts that are respectively disposed in said pin receptacles (622), one of said conductive socket contacts (622) being coupled to said first end (421) of said detecting resistor (42), other ones of said conductive socket contacts (622) being coupled to said control unit (5); and
wherein, when said container bottom (20) is securely and correctly mounted to said housing (30), said pin terminals (61) are inserted into said pin receptacles (621) and electrically contact said conductive socket contacts (622), respectively.
